Europäisches Patentamt

European Patent Office

Office européen des brevets

(19)

(11) Numéro de publication : **0 187 064**
**B1**

(12) **FASCICULE DE BREVET EUROPÉEN**

(45) Date de publication du fascicule du brevet :
26.04.89

(21) Numéro de dépôt : 85402264.7

(22) Date de dépôt : 21.11.85

(51) Int. Cl.⁴ : **A 22 B 5/20**

(54) **Dispositif de guidage intérieur de la colonne vertébrale pour la fente des animaux de boucherie.**

(30) Priorité : 29.11.84 FR 8418165

(43) Date de publication de la demande :
09.07.86 Bulletin 86/28

(45) Mention de la délivrance du brevet :
26.04.89 Bulletin 89/17

(84) Etats contractants désignés :
DE IT NL SE

(56) Documents cités :
FR--A-- 2 535 944

(73) Titulaire : Société Anonyme : **SOCIETE DES ATE-
LIERS DE CONSTRUCTIONS MECANIQUES: LUCIEN
DURAND
Quartier des Buis BAIX
F-07210 Chomerac (FR)**

(72) Inventeur : **Genevray, Henri
10, rue de Luspel
F-68500 Guebwiller (FR)**

(74) Mandataire : **Ropital-Bonvarlet, Claude
Cabinet BEAU DE LOMENIE 99, Grande rue de la
Guillotière
F-69007 Lyon (FR)**

EP 0 187 064 B1

## Description

L'invention est relative à un dispositif de guidage de la face ou partie ventrale de la colonne vertébrale pour les installations de fente automatique des animaux de boucherie.

Dans ces installations, la carcasse de l'animal est suspendue par ses pattes arrière à un transporteur et elle est fendue longitudinalement, de haut en bas, par un organe de coupe, en général un fendoir, qui la sépare en deux parties égales.

Pour assurer que la colonne vertébrale se présente et soit maintenue devant l'organe de coupe, on connaît divers dispositifs de guidage. Il s'est avéré depuis fort longtemps que le meilleur guidage est obtenu si on utilise un dispositif de guidage de la face ventrale, ou dispositif intérieur, et un dispositif de guidage de la face dorsale, ou dispositif extérieur le premier dispositif coopérant avec la face ventrale de la colonne vertébrale et le second dispositif coopérant avec le dos de l'animal.

Le document US-A-637 490 décrit un double dispositif de guidage qui comporte un galet extérieur et un patin rectiligne intérieur. Dans ce dispositif, la colonne est par conséquent maintenue et guidée à la fois du côté dorsal et du côté ventral ; toutefois, du fait que le patin intérieur est rectiligne, il ne permet pas d'absorber facilement les déformations de la colonne vertébrale, qu'elles soient naturelles ou qu'elles résultent de malformations.

Pour tenter de remédier à cet inconvénient, on a proposé de remplacer le patin intérieur par un palonnier en forme de croissant qui est équipé, à chaque extrémité, d'un galet à gorge. Ce dispositif donne de meilleurs résultats mais, du fait que le guidage de la face intérieure de la colonne vertébrale ne se fait que par appui de deux points de la colonne vertébrale, il ne permet pas de redresser parfaitement la colonne vertébrale dans le cas de déformations latérales, ce qui se traduit, au-dessus du galet supérieur, par une présentation de la colonne devant l'organe de coupe en mauvaise position.

On connaît également, par le document FR-A-2.535.944, un dispositif de guidage de la partie ventrale de la colonne vertébrale pour la fente des animaux de boucherie, comportant un palonnier articulé sur un support et portant, à une extrémité, une première surface de guidage qui coopère directement avec la face ventrale de la colonne vertébrale en au moins un point. A l'autre extrémité le palonnier est muni d'une seconde surface de guidage, espacée de la première surface de guidage, qui est destinée à coopérer directement avec la face ventrale suivant au moins un point. Toutefois, avec un tel dispositif, on rencontre les mêmes difficultés du fait que le guidage de la face ventrale de la colonne vertébrale se fait encore suivant deux points.

L'invention a pour but de remédier à ces inconvénients en proposant un dispositif de guidage le long de la face ventrale de la colonne vertébrale qui maintient parfaitement la colonne vertébrale quelles que soient les déformations de celle-ci.

A cet effet, le dispositif de guidage selon l'invention, comportant un palonnier articulé sur un support et portant, à une extrémité, une première surface de guidage destinée à coopérer directement avec la face ventrale de la colonne vertébrale suivant au moins un point et, à l'autre extrémité, une seconde surface de guidage, espacée de la première surface de guidage et destinée à coopérer directement avec la face ventrale de la colonne vertébrale suivant au moins un point, est caractérisé par le fait que la seconde surface de guidage est constituée par un patin articulé sur l'autre extrémité du palonnier et coopérant directement avec ladite face ventrale suivant au moins deux points.

De préférence, la première surface est située en direction de travail à l'extrémité postérieure du palonnier et le patin est articulé à l'extrémité antérieure de celui-ci.

L'une au moins desdites surfaces peut être sensiblement rectiligne et, pour une position rectiligne de la colonne vertébrale, les deux surfaces peuvent être alignées.

Pour le passage des parties en saillie des vertèbres, les deux surfaces sont évidées en forme de V, le V étant à faces lisses ou en gradins. Les profils des V peuvent être identiques ou différents pour les deux surfaces.

Pour faciliter la venue en coopération de la colonne vertébrale avec les deux surfaces, celles-ci présentent des extrémités d'attaque qui sont courbes pour pouvoir s'adapter aux déformations de la colonne vertébrale.

On comprendra bien l'invention à la lecture de la description qui va suivre et en référence aux dessins annexés dans lesquels :

Fig. 1 est une vue latérale schématique montrant un dispositif de guidage selon l'invention coopérant avec la carcasse d'un animal de boucherie ;

Fig. 2 est, à plus grande échelle, une vue latérale du dispositif de guidage de la Fig. 1 ;

Fig. 3 est une coupe selon la ligne brisée III-III de la Fig. 2 ; et

Figs 4 et 5 montrent schématiquement la position du dispositif de guidage pour le passage de deux points d'inflexion de la colonne vertébrale.

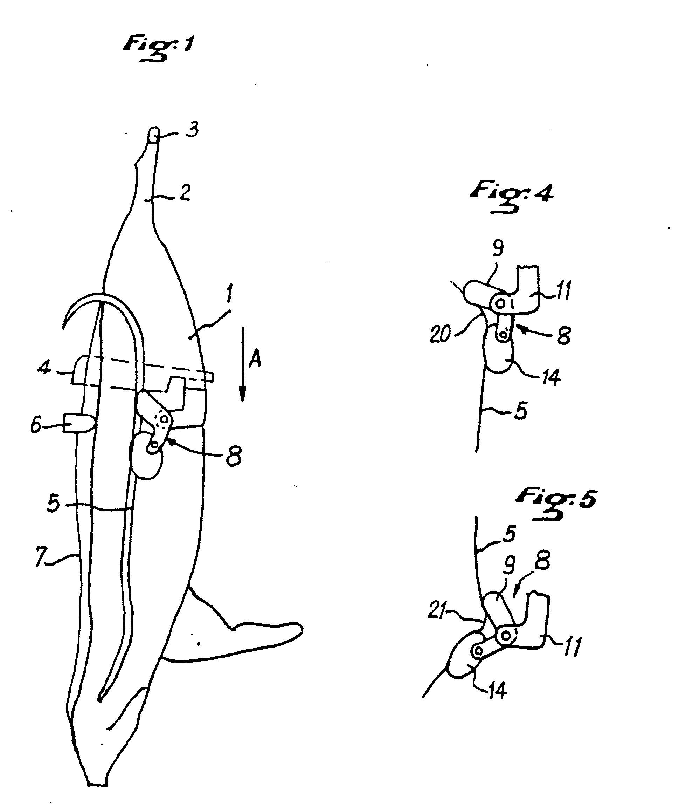

On a représenté sur la Fig. 1, de façon schématique, la carcasse 1 d'un animal de boucherie qui est suspendu par ses pattes arrière écartées 2 à un convoyeur schématiquement représenté en 3. De façon connue, la fente de la carcasse 1 en deux moitiés égales s'effectue à l'aide d'un organe de coupe 4, par exemple du type fendoir, qui est introduit entre les pattes arrière 2 et qui descend verticalement suivant la direction A en étant animé d'un mouvement approprié par rapport à son support (non représenté). Pour que la colonne vertébrale 5 se présente correctement dans le plan de coupe, on prévoit, d'une manière générale connue, un dispositif de guidage 6 appuyant dans la zone centrale du dos 7 de l'animal, et un dispositif de guidage 8 appuyant sur la face ventrale de la colonne vertébrale.

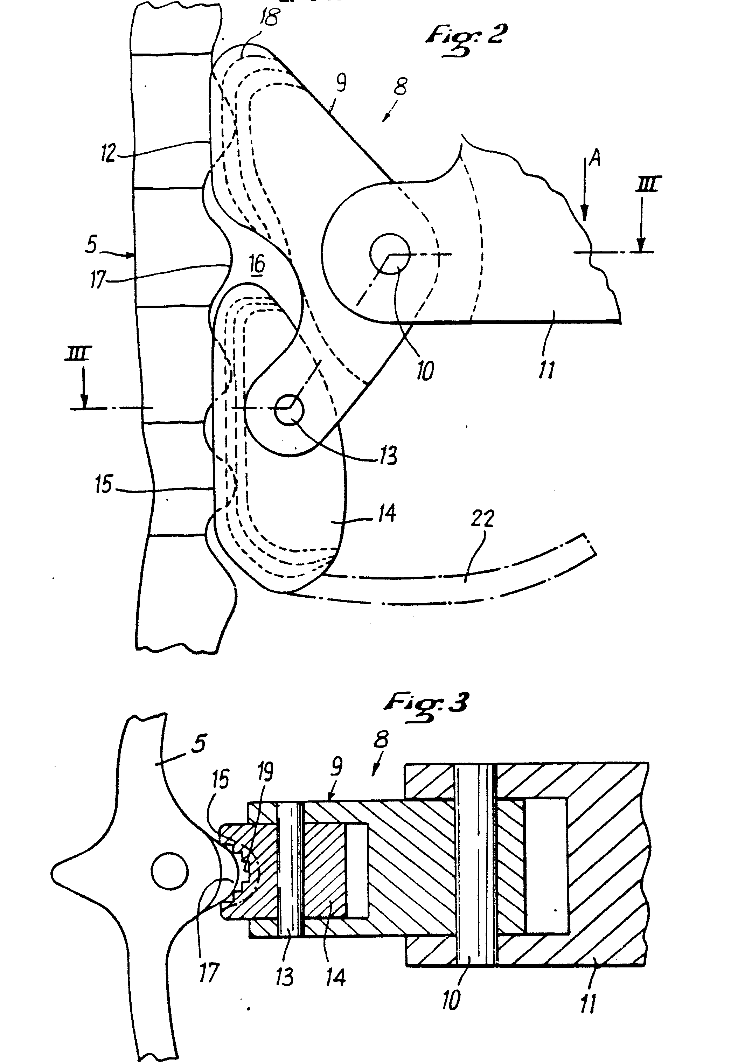

Comme montré aux Figs. 2 et 3, le dispositif de guidage intérieur 8 selon l'invention comporte un palonnier 9 articulé en 10, autour d'un axe transversal horizontal, perpendiculaire à la direction A, sur un support 11 qui se déplace suivant la direction A et qui porte également l'organe de coupe 4 et ses moyens d'actionnement, l'organe de coupe et les moyens d'actionnement n'étant pas représentés sur les Figs 2 et 3.

A une extrémité, le plafonnier 9 présente une première surface 12 de guidage destinée à coopérer directement avec la face intérieure de la colonne 5 en au moins un point et, à son autre extrémité, il porte, autour d'une articulation 13 d'axe parallèle à celui de l'articulation 10, un patin 14 qui présente une seconde surface de guidage 15, espacée de la première surface 12 dans la direction A et destinée également à coopérer directement avec la face ventrale de la colonne suivant au moins deux points.

Dans le mode de réalisation représenté, la première surface 12, qui appartient au palonnier 9, est prévue à l'extrémité supérieure de celui-ci, tandis que le patin 14 est prévu à l'extrémité inférieure.

Le palonnier 9 se présente sous la forme d'un levier coudé de sorte que, entre l'extrémité inférieure de la surface supérieure 12 et l'extrémité supérieure de la surface inférieure 15, il subsiste un espace vide 16, d'une dimension de 20 à 70 mm dans la direction A, pour absorber les déformations de la colonne vertébrale 5.

Comme représenté, les surfaces 12 et 15 peuvent être essentiellement rectilignes. Toutefois, leurs extrémités sont de préférence arrondies ou courbes pour faciliter le début de leur coopération avec la colonne vertébrale. Comme représenté à la Fig. 2, en supposant que la colonne vertébrale 5 est rectiligne, les surfaces 12 et 15 sont en alignement.

Pour permettre le passage des saillies intérieures 17 des vertèbres de la colonne, les surfaces 12, 15 sont évidées pour présenter une cavité 18, 19 en forme de V, dans laquelle viennent se loger ces saillies 17. Les cavités 18, 19 peuvent avoir des faces en gradins, comme représenté, ou, en variante, des faces lisses.

Dans un exemple particulier, la surface supérieure 12 a une longueur active d'environ 25 mm et la surface inférieure 15 a une longueur active d'environ 60 mm, de sorte que, en général, la surface supérieure 12 coopère avec une seule vertèbre, tandis que la surface inférieure 15 coopère avec au moins deux vertèbres, le dispositif selon l'invention fournissant ainsi un appui ventral pour au moins trois vertèbres.

Avec un tel agencement, du fait qu'au moins deux vertèbres successives sont maintenues en position correcte parallèle à la direction A par la surface inférieure 15, elle est correctement redressée et se présente à l'organe de coupe, qui est situé juste au-dessus de la surface supérieure 12, en position parfaite. Pendant la coupe, la surface supérieure 12 n'a qu'un rôle de maintien de la colonne vertébrale dans la position correcte qui est donnée par la surface inférieure 15.

Le dispositif selon l'invention permet donc d'absorber et de corriger les déformations latérales ou scolioses de la colonne vertébrale.

On a montré aux Figs. 4 et 5, de manière schématique, le passage du dispositif selon l'invention dans la zone de deux points d'inflexion 20, 21 de la colonne vertébrale, ces points étant situés au voisinage des extrémités de colle-ci. Grâce à l'articulation du palonnier 9 sur le support 11 et à l'articulation du patin 14 sur le palonnier, ces points d'inflexion sont franchis sans difficulté, le dispositif de guidage se conformant parfaitement au profil de la colonne.

On a représenté en traits mixtes à la Fig. 2 une queue 22 prévue fixement à l'extrémité inférieure du patin 14 et permettant à celui-ci de basculer lorsqu'il arrive en fin de course de descente, au voisinage de la tête.

## Revendications

1. Dispositif de guidage le long de la face ventrale de la colonne vertébrale pour la fente des animaux de boucherie, comportant un palonnier (9) articulé sur un support (11) et portant, à une extrémité, une première surface (12) de guidage destinée à coopérer directement avec la face ventrale de la colonne vertébrale (5) en au moins un point et, à l'autre extrémité une seconde surface de guidage (15), espacée de la première surface de guidage (12) et destinée à coopérer directement avec la face ventrale de la colonne vertébrale suivant au moins un point, caractérisé par le fait que la seconde surface de guidage (15) est constituée par un patin (14) articulé sur l'autre extrémité du palonnier (9) et coopérant directement avec ladite face ventrale suivant au moins deux points.

2. Dispositif selon la revendication 1, caractérisé par le fait que la première surface de guidage (12) est située en direction de travail (A) à l'extrémité postérieure du palonnier (9) et que le patin (14) est articulé à l'extrémité antérieure de celui-ci.

3. Dispositif selon l'une des revendications 1 et 2, caractérisé par le fait que l'une au moins des surfaces (12, 15) est sensiblement rectiligne.

4. Dispositif selon la revendication 3, caractérisé par le fait que, pour une position rectiligne de la colonne vertébrale (5), les surfaces (12, 15) sont sensiblement alignées.

5. Dispositif selon l'une des revendications 1 à 4, caractérisé par le fait que les surfaces de guidage (12, 15) sont évidées sensiblement en forme de V.

6. Dispositif selon la revendication 5, caractérisé par le fait que les faces du V sont en gradins.

7. Dispositif selon la revendication 5, caractérisé par le fait que les faces du V sont lisses.

8. Dispositif selon l'une des revendications 5 à 7, caractérisé par le fait que les V des deux surfaces (12, 15) sont identiques.

9. Dispositif selon l'une des revendications 5 à 7, caractérisé par le fait que les V des deux surfaces (12, 15) sont différents.

10. Dispositif selon l'une des revendications 1 à 9, caractérisé par le fait que les extrémités des surfaces de guidage (12, 15) sont courbes pour s'adapter aux déformations de la colonne vertébrale (5) et pour faciliter la venue en coopération de celle-ci avec les surfaces de guidage.

11. Dispositif selon l'une des revendications 1 à 10, caractérisé par le fait que le patin (14) porte à son extrémité inférieure une queue (22) de basculement.

## Claims

1. Device for guiding the spine along the ventral face, for the splitting-up of animals carcasses, comprising a swing plate (9) mounted for pivoting on a support (11) and carrying, at one end, a first guiding surface (12) designed to cooperate directly with the ventral face of the spine (5) in at least one point and, at the other end, a second guiding surface (15) spaced from the first guiding surface (12) and designed to cooperate directly with the ventral face of the spine along at least one point, characterized by the fact that the second guiding surface (15) is constituted by a guiding plate (14) mounted for pivoting on the other end of the swing plate (9) and cooperating directly with said ventral face along at least two points.

2. Device according to claim 1, characterized by the fact that the first guiding surface (12) is situated in working direction (A) at the rear end of swing plate (9) and that guiding plate (14) is mounted for pivoting on the front end thereof.

3. Device according to one of claims 1 and 2, characterized by the fact that one at least of the surfaces (12, 15) is substantially rectilinear.

4. Device according to claim 3, characterized by the fact that, for a rectilinear position of the spine (5), the surfaces (12, 15) are substantially in line.

5. Device according to one of claims 1 to 4, characterized by the fact that the guiding surfaces (12, 15) are hollowed to form substantially a V-shape.

6. Device according to claim 5, characterized by the fact that the faces of the V form steps.

7. Device according to claim 5, characterized by the fact the faces of the V are plane.

8. Device according to one of claims 5 to 7, characterized by the fact that the V of the two surfaces (12, 15) are identical.

9. Device according to one of claims 5 to 7, characterized by the fact that the V of the two surfaces (12, 15) are different.

10. Device according to one of claims 1 to 9, characterized by the fact that the ends of the guiding surfaces (12, 15) are bent in order to adapt to the deformations of the spine (5) and in order to help the latter to cooperate with the guiding surfaces.

11. Device according to one of claims 1 to 10, characterized by the fact the guiding plate (14) carries at its lower end a swinging tail (22).

## Patentansprüche

1. Vorrichtung zur Führung entlang der inneren oder Bauchseite der Wirbelsäule für das Zerteilen von Schlachttieren, mit einem Steuer- bzw. Führungshebel (9), der an einem Support (11) gelenkig angebracht ist und an einem Ende eine erste Führungsfläche (12) zum direkten Zusammenwirken mit der Bauchseite der Wirbelsäule (5) an wenigstens einem Punkt und am anderen Ende eine zweite Führungsfläche (15) aufweist, die im Abstand von der ersten Führungsfläche (12) angeordnet und dazu bestimmt ist, direkt mit der Bauchseite der Wirbelsäule gemäß wenigstens eines Punktes zusammenzuwirken, dadurch gekennzeichent, daß die zweite Führungsfläche (15) durch eine Kufe bzw. ein Tragsegment (14) gebildet ist, das an dem anderen Ende des Führungshebels (9) gelenkig angeordnet ist und direkt mit der Bauchseite gemäß wenigstens zweier Punkte zusammenwirkt.

2. Vorrichtung nach Anspruch 1, dadurch gekennzeichnet, daß die erste Führungsfläche (12) in Arbeitsrichtung (A) am späteren Ende des Führungshebels (9) angeordnet ist, und daß das Tragsegment (14) gelenkig am vorherigen Ende von diesem angeordet ist.

3. Vorrichtung nach Anspruch 1 oder 2, dadurch gekennzeichnet, daß wenigstens eine der Flächen (12, 15) im wesentlichen geradlinig ist.

4. Vorrichtung nach Anspruch 3, dadurch gekennzeichnet, daß für eine geradlinige Stellung der Wirbelsäule (5) die Flächen (12, 15) im wesentlichen ausgerichtet sind.

5. Vorrichtung nach einem der Ansprüche 1 bis 4, dadurch gekennzeichnet, daß die Führungsflächen im wesentlichen in V-Form freigespart sind.

6. Vorrichtung nach Anspruch 5, dadurch gekennzeichnet, daß die Seiten des V abgestuft sind.

7. Vorrichtung nach Anspruch 5, dadurch gekennzeichnet, daß die Seiten des V glatt sind.

8. Vorrichtung nach einem der Ansprüche 5 bis 7, dadurch gekennzeichnet, dan die V der beiden Flächen (12, 15) identisch sind.

9. Vorrichtung nach einem der Ansprüche 5 bis 7, dadurch gekennzeichnet, daß die V der beiden Flächen (12, 15) unterschiedlich sind.

10. Vorrichtung nach einem der Ansprüche 1 bis 9, dadurch gekennzeichnet, daß die Enden der Führungsflächen (12, 15 gebogen sind, um sich den Deformationen der Wirbelsäule (5) anzupassen und um das Zusammenwirken dieser mit den Führungsflächen zu erleichtern.

11. Vorrichtung nach einem der Ansprüche 1 bis 10, dadurch gekennzeichent, daß das Tragsegment (14) an seinem unteren Ende ein Kippendstück (22) aufweist.

Fig. 1

Fig. 4

Fig. 5

EP 0 187 064 B1

Fig. 2

Fig. 3

2